# EUROPEAN PATENT APPLICATION

(11) **EP 4 560 896 A1**
(43) Date of publication of application: **28.05.2025**
(21) Application number: 24212368.5
(22) Date of filing: 12.11.2024
(51) Int. Cl.: H02K 7/102, H02K 7/116

(54) **DRIVE DEVICE**

(30) Priority: 21.11.2023 JP 2023197551
(71) Applicant: Nabtesco Corporation, Tokyo (JP)
(72) Inventor: Maekawa, Takahiro, Tokyo (JP); Hatanaka, Katsuyuki, Tokyo (JP); Kosaka, Kohei, Tokyo (JP)
(74) Representative: Grünecker Patent- und Rechtsanwälte PartG mbB

(57) **Abstract**

A drive device includes a motor, a first speed reducer, and a first brake. The motor has a motor shaft that is configured to rotate about an axis of rotation extending along an axial direction. The first speed reducer has a first input shaft that is connected to the motor shaft and configured to rotate, and a first output part configured to reduce rotation of the first input shaft and output the reduced rotation. The first brake is interposed between the motor and the first speed reducer, and configured to apply a braking force to the first input shaft.

## Description

### CROSS-REFERENCE TO RELATED APPLICATIONS

This application is based on and claims the benefit of priority from Japanese Patent Application Serial No. 2023-197551 (filed on November 21, 2023), the contents of which are hereby incorporated by reference in their entirety.

### TECHNICAL FIELD

The present invention relates to a drive device.

### BACKGROUND

As disclosed in Japanese Utility Model Application Publication No. Hei 1-118244 ("the '244 Publication"), a conventionally known drive device includes a motor and a speed reducer for reducing the rotation of the motor and outputting the reduced rotation. The drive device can be used to move heavy objects such as elevator cages.

Such a drive device may include a brake configured to stop the rotation of the speed reducer in order to hold the heavy objects at an intended position, or, when the drive device is included in a moving device, to keep the orientation of the moving device unchanged. The '244 Publication discloses a drive device including a motor, a speed reducer and a brake. The motor, speed reducer, and brake are arranged in this order in the axial direction of the motor.

There is a demand for smaller drive devices. It is particularly desired to reduce the size of the drive devices in the axial direction of the motor.

### SUMMARY

The present invention has been made in view of such circumstances, and an object of the invention is to reduce the size of the drive devices in the axial direction.

The invention relates to the following aspects (1) to (8).
(1) A drive device including:
   a motor including a motor shaft configured to rotate on an axis of rotation extending along an axial direction;
   a first speed reducer including:
      a first input shaft connected to the motor shaft and configured to rotate; and
      a first output part configured to reduce rotation of the first input shaft and output the reduced rotation; and
   a first brake disposed between the motor and the first speed reducer, the first brake being configured to apply a braking force to the first input shaft.
(2) The drive device of (1), wherein a position of at least a portion of the first brake in the axial direction is aligned with a position of at least a portion of the motor shaft in the axial direction.
(3) The drive device of (1) or (2), wherein the motor includes a second brake configured to apply a braking force to the motor shaft.
(4) The drive device of any one of (1) to (3), wherein the first brake includes:
   a solenoid configured to generate a magnetic force upon being powered;
   a rotatable plate configured to rotate relative to the solenoid but not to rotate relative to the first input shaft;
   a stationary plate configured not to rotate relative to the solenoid; and
   an armature configured to move in the axial direction, the armature being biased by a bias force acting toward a first direction in the axial direction, the armature being configured to move toward a second direction that is opposite to the first direction upon being acted upon by the magnetic force of the solenoid, the armature being configured to press the rotatable plate against the stationary plate upon being acted upon by the bias force or the magnetic force to apply a braking force to the first input shaft.
(5) The drive device of (4), a position of at least a portion of the solenoid in the axial direction is aligned with a position of at least a portion of the motor shaft in the axial direction.
(6) The drive device of (4) or (5),
   wherein the first brake includes a hub connecting the rotatable plate to the first input shaft, and
   wherein a position of at least a portion of the hub in the axial direction is aligned with a position of at least a portion of the motor shaft in the axial direction.
(7) The drive device of any one of (1) to (6), further comprising a second speed reducer connected to the first output part, the second speed reducer including a second output part configured to reduce rotation of the first output part and output the reduced rotation.
(8) The drive device of (7), wherein the first speed reducer includes:
   a first casing having, on an inner circumferential surface thereof, internal teeth arranged in a circumferential direction;
   a first external gear having external teeth meshing with the internal teeth of the first casing;
   a first shaft member connected to the first input shaft, the first shaft member being configured to cause the first external gear to eccentrically oscillate; and
   a first carrier supporting the first shaft member, the first carrier being configured to serve as the first output part configured to rotate relative to the first casing, and
   wherein the second speed reducer includes:
      a second input shaft connected to the first carrier;
      a second casing having, on an inner circumferential surface thereof, internal teeth arranged in a circumferential direction;
      a second external gear having external teeth meshing with the internal teeth of the second casing;
      a second shaft member connected to the second input shaft, the second shaft member being configured to cause the second external gear to eccentrically oscillate; and
      a second carrier supporting the second shaft member, the second carrier being configured to serve as the second output part configured to rotate relative to the second casing.

### ADVANTAGEOUS EFFECTS

The present invention can provide a drive device having a reduced size in the axial direction.

### BRIEF DESCRIPTION OF THE DRAWINGS

Fig. 1 is a longitudinal sectional view of a drive device for describing an embodiment.
Fig. 2 is a partial sectional view schematically showing a portion of a speed reducer shown in Fig. 1.
Fig. 3 is a partial sectional view schematically showing a different portion of the speed reducer shown in Fig. 1.
Fig. 4 is a partial sectional view of a brake shown in Fig. 1.
Fig. 5 schematically shows a conventional drive device.

### DESCRIPTION OF THE PREFERRED EMBODIMENTS

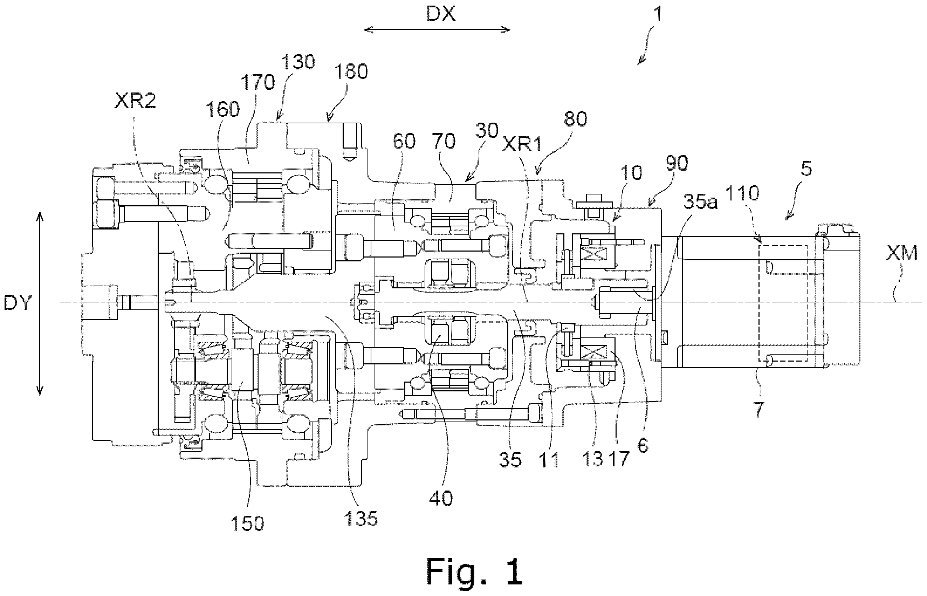

One embodiment of the present invention will be hereinafter described with reference to the attached drawings. Figs. 1 to 4 are provided for describing one embodiment of the present invention. The features and components shown in one or more of the drawings may not be shown in other drawings. The drawings may have different scales and aspect ratios.

According to the present embodiment, a drive device 1 includes a motor 5, a brake 10, a first speed reducer 30, and a second speed reducer 130. The motor 5, brake 10, first speed reducer 30, and second reducer 130 are arranged in this order in the direction extending along the axis of rotation of the motor 5 (hereinafter also referred to as "the motor rotation axis") XM.

The motor 5 has a motor shaft 6, a rotor and a stator, which are not shown, and a motor casing 7 housing part of the motor shaft 6, and the rotor and stator. The motor shaft 6 is coupled with the first speed reducer 30. In the example shown, a second brake 110 is attached to the motor 5. The second brake 110 is housed in the motor casing 7.

The first speed reducer 30 reduces the rotation input from the motor shaft 6 and outputs the reduced rotation to the second speed reducer 130. The second speed reducer 130 reduces the rotation input from the first speed reducer 30 and outputs the reduced rotation. The drive device 1 configured as described above can be used to move heavy objects such as elevator cages, large metal doors and lids. The brake 10 applies a braking force to the first and second speed reducers 30 and 130. Therefore, a moving device including the drive device 1 can keep its orientation unchanged, and the drive device 1 can hold a heavy object at an intended position (for example, at a predetermined height).

In the present embodiment, the first and second speed reducers 30 and 130 are both eccentric oscillating speed reducers. Eccentric oscillating speed reducers typically have a small backlash. The drive device 1 as a whole can be thus less likely to malfunction. The speed reducers 30 and 130 are not necessarily eccentric oscillating speed reducers, but may be other types of speed reducers. For example, the speed reducers 30 and 130 may be planetary gear speed reducers, constituted by speed reducing structures in which a planetary gear speed reducer and an eccentric oscillating speed reducer are combined together, or constituted by speed reducing structures in which an eccentric oscillating speed reducer and a worm speed reducer are combined together. The speed reducers 30 and 130 may be constituted by any other types of speed reducing structures.

In the present embodiment, the first and second brakes 10 and 110 are electromagnetic brakes, but are not limited to such. The brakes 10 and 110 may be other types of brakes, such as mechanical brakes. The brakes 10 and 110 may be different types.

The following now describes the speed reducers 30 and 130 and the brakes 10 and 110.

### <Speed Reducers 30 and 130>

The first speed reducer 30 includes a first input shaft 35, a first external gear 40, a first shaft member 50 for causing the first external gear 40 to eccentrically oscillate, a first carrier 60 rotatably supporting the first shaft member 50, and a first casing 70 substantially shaped like a circular cylinder. The first casing 70 houses therein at least a portion of the first carrier 60. Bearings may be provided between the first external gear 40 and the first shaft member 50, between the first carrier 60 and the first shaft member 50, and between the first casing 70 and the first carrier 60. The first casing 70 and first carrier 60 are rotatable relative to each other about a first main rotation axis XR1. In the example shown, the first speed reducer 30 is partly housed in a first housing 80. In the example shown, the first main rotation axis XR1 coincides with the motor rotation axis XM.

The second speed reducer 130 is configured in the same manner as the first speed reducer 30. The second speed reducer 130 includes a second input shaft 135, a second external gear 140, a second shaft member 150 for causing the second external gear 140 to eccentrically oscillate, a second carrier 160 rotatably supporting the second shaft member 150, and a second casing 170 substantially shaped like a circular cylinder. The second casing 170 houses therein at least a portion of the second carrier 160. Bearings may be provided between the second external gear 140 and the second shaft member 150, between the second carrier 160 and the second shaft member 150, and between the second casing 170 and the second carrier 160. The second casing 170 and second carrier 160 are rotatable relative to each other about a second main rotation axis XR2. In the example shown, the second speed reducer 130 is partly housed in a second housing 180. In the example shown, the second main rotation axis XR2 coincides with the motor rotation axis XM and with the first main rotation axis XR1. Hereafter, the term "axial direction DX" refers to the direction parallel to the rotation axes XM, XR1, XR2 and a central axis XB1, which will be described below. The term "radial direction DY" refers to the direction perpendicular to the axial direction DX.

The first input shaft 35 of the first speed reducer 30 is connected to the motor shaft 6 to receive rotation input from the motor shaft 6. The first speed reducer 30 reduces the input rotation and outputs the reduced rotation. The first speed reducer 30 reduces the input rotation and outputs the reduced rotation in the form of relative rotation of the first casing 70 and the first carrier 60. In the example shown, the first casing 70 is fixedly attached onto the motor casing 7 via the first housing 80 and a connecting member 90. Therefore, he first carrier 60 serves as an output portion of the first speed reducer 30 (hereinafter also referred to as "the first output portion"). The first carrier 60 rotatably holds the first shaft member 50.

In the illustrated example, the second input shaft 135 of the second speed reducer 130 receives rotation input from the first carrier 60 of the first speed reducer 30. The second speed reducer 130 reduces the input rotation and outputs the reduced rotation in the form of relative rotation of the second casing 170 and the second carrier 160. In the example shown, the second casing 170 is fixedly attached onto the motor casing 7 via the second housing 180, first casing 70, first housing 80 and connecting member 90. Therefore, the second carrier 160 serves as an output portion of the second speed reducer 130 (hereinafter also referred to as "the second output portion"). The second carrier 160 rotatably holds the second shaft member 150.

The input shafts 35 and 135 respectively input rotation to the shaft members 50 and 150. The shaft members 50 and 150 respectively include eccentric members 55 and 155. The centers of the eccentric members 55 and 155 are respectively off the centers of rotation of the shaft members 50 and 150. The external gears 40 and 140 are respectively penetrated by the shaft members 50 and 150. The external gears 40 and 140 are respectively provided on the eccentric members 55 and 155. As the shaft members 50 and 150 rotate, the external gears 40 and 140 eccentrically oscillate. The external gears 40 and 140 have external teeth 45 and 145. Internal teeth 75 and 175 are provided on the inner surfaces of the casings 70 and 710. The external teeth 45 and 145 and the internal teeth 75 and 175 are arranged next to each other in the circumferential direction that is centered around the main rotation axes XR1 and XR2. The external teeth 45 and 145 mesh with the internal teeth 75 and 175. The number of external teeth 45 (145) is different from the number of internal teeth 75 (175). Once rotation is input into the shaft members 50 and 150, the internal teeth 75 and 175 mesh with the external teeth 45 and 145, so that the external gears 40 and 140 eccentrically oscillate. Because of the difference in number between the internal teeth 75 (175) and the external teeth 45 (145), the carrier 60 (160) supporting the external gear 40 (140) and the shaft members 50 (150) rotates relative to the casing 70 (170).

The following describes in detail the carrier 60 (160), shaft member 50 (150) and external gear 40 (140) in the stated order and their specific configurations shown in the drawings.

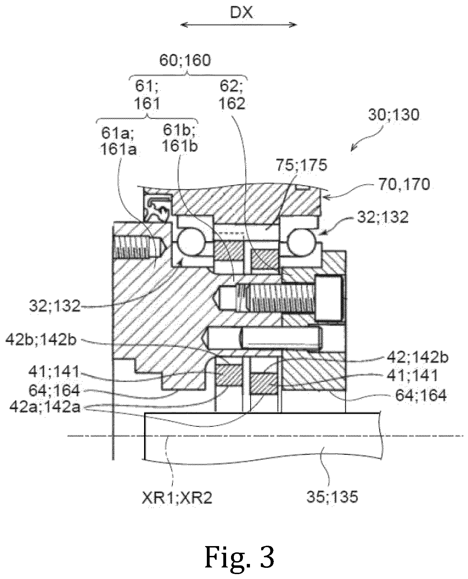

As best shown in Fig. 3, the carrier 60 (160) is accommodated in the casing 70 (170) via a pair of main bearings 32 (132). The carrier 60 (160) is rotatable relative to the casing 70 (170) about the main rotation axis XR1 (XR2). The illustrated carrier 60 (160) has a carrier base 61 (161) and a carrier plate 62 (162) fixedly attached to each other. The carrier base 61 (161) may be secured to the carrier plate 62 (162) using a bolt or other fasteners. The carrier base 61 (161) is constituted by a base plate 61a (161a) shaped like a disk and a plurality of columns 61b (161b) protruding in the axial direction DX from the base plate 61a (161a). The base plate 61a (161a) may be combined with the columns 61b (161b) into a single piece. The columns 61b (161b) may be arranged at equal intervals in the circumferential direction centered around the main rotation axis XR1 (XR2). In the illustrated specific example, the speed reducer 30 (130) has two (three) columns 61b (161b). In the illustrated example, the first carrier 60 of the first speed reducer 30 has two columns 61b, and the second carrier 160 of the second speed reducer 130 has three columns 161b.

The illustrated carrier 60 (160) has a center hole 64 (164). The center hole 64 (164) extends through the carrier base 61 (161) and through the carrier plate 62 (162). The center hole 64 (164) is located on the main rotation axis XR1 (XR2). The input shaft 35 (135) passes through the center hole 64 (164).

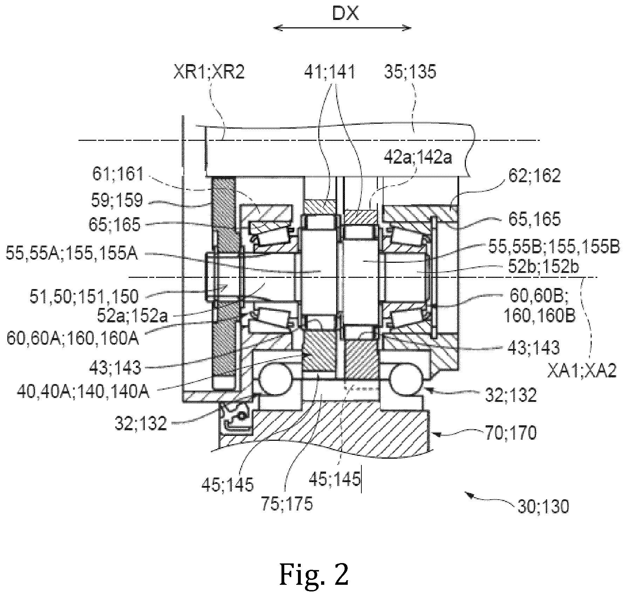

As shown in Fig. 2, the carrier 60 (160) has a plurality of through holes 65 (165) corresponding to a plurality of shaft members 50 (150). The through holes 65 (165) extend through the carrier base 61 (161) and through the carrier plate 62 (162). The through holes 65 (165) are arranged at equal intervals in the circumferential direction centered around the main rotation axis XR1 (XR2). The respective shaft members 50 (150) pass through the corresponding through holes 65 (165).

As shown in Fig. 2, the shaft members 50 (150) are rotatably held by the carrier 60 (160). The shaft members 50 (150) are rotatable on the rotation axis XA1 (XA2) relative to the carrier 60 (160). The rotation axes XA1 and XA2 are parallel to the axial direction DX. The speed reducer 30 (130) shown includes a plurality of shaft members 50 (150). The shaft members 50 (150) are inserted through the through holes 65 (165) in the carrier 60 (160). The shaft members 50 (150) are arranged at equal intervals in the circumferential direction centered around the main rotation axis XR1 (XR2). In the illustrated example, the speed reducer 30 (130) has two (three) shaft members 50 (150). The carrier 60 (160) thus has two (three) through holes 65 (165). In the illustrated example, the first speed reducer 30 has two shaft members 50, and the second speed reducer 130 has three shaft members 150.

The shaft members 50 (150) illustrated each include a shaft body 51 (151) and a pair of eccentric members 55 (155) provided on the shaft body 51 (151). The eccentric members 55 and 155 are shaped like a circular column. The eccentric members 55 (155) have a larger diameter than the shaft body 51 (151). The center of the eccentric members 55 (155) is off the center of rotation of the shaft member 50 (150), or the rotation axis XA1 (XA2). The pair of eccentric members 55 (155) is constituted by an eccentric member 55A (155A) and an eccentric member 55B (155B). The centers of the eccentric members 55A and 55B (155A and 155B) are off the rotation axis XA1 (XA2) in opposite directions by the same amount. In other words, in the section orthogonal to the axial direction DX, the center of the eccentric member 55A (155A) and the center of the eccentric member 55B (155B) are located symmetrically with respect to one point on the rotation axis XA1 (XA2).

The shaft body 51 (151) has a first bearing support 52a (152a) that is inserted into the carrier base 61 (161), and a second bearing support 52b (152b) that is inserted into the carrier plate 62 (162). The bearing support 52a (152a) supports the base plate 61a (161a) via a bearing. The bearing support 52b (152b) supports the carrier plate 62 (162) via a bearing. The eccentric members 55A and 55B (155A and 155B) are located between the bearing supports 52a and 52b (152a and 152b) in the axial direction DX.

The shaft member 50 (150) shown further includes an input gear 59 (159) fixedly attached to the shaft body 51 (151). The input gear 59 (159) receives rotation input from the input shaft 35 (135). More specifically, the input gear 59 (159) meshes with the gear on the outer periphery of the input shaft 35 (135), so that it can rotate upon rotation of the input shaft 35 (135). In the illustrated example, the input gear 59 (159), the first bearing support 52a (152a), eccentric member 55A (155A), eccentric member 55B (155B), and second bearing support 52b (152b) are arranged in this order in the axial direction DX.

In the illustrated speed reducer 30 (130), the external gear 40 (140) is constituted by an external gear 40A (140A) and an external gear 40B (140B). The external gear 40A (140A) is disposed on the eccentric members 55A (155A) of the shaft members 50 (150). The external gear 40B (140B) is disposed on the eccentric members 55B (155B) of the shaft members 50 (150). The external gears 40A and 40B (140A and 140B) are located, in the axial direction DX, between the base plate 61a (161a) of the carrier base 61 (161) and the carrier plate 62 (162).

The illustrated external gear 40 (140) includes a disk-shaped center plate 41 (141), and external teeth 45 (145) arranged around the periphery of the center plate 41 (141). The center plate 41 (141) has a center hole 42a (142a) and column pass holes 42b (142b). The center hole 42a (142a) is located on the main rotation axis XR1 (XR2). The center hole 42a (142a) faces the center hole 64 (164) in the axial direction DX. In the illustrated example, the column pass holes 42b (142b) are arranged at equal intervals in the circumferential direction centered around the center hole 42a (142a). The columns 61b (161b) of the carrier 60 (160) penetrate the column pass holes 42b (142b). In the illustrated specific example, the number of column pass holes 42b (142b) in the center plate 41 (141) is two or three, which is determined by the number of columns 61b (161b).

As shown in Fig. 2, the center plate 41 (141) further has holes 43 (143). In the illustrated example, the number of holes 43 (143) is determined by that of shaft members 50 (150). Thus, two (three) holes 43 (143) are arranged at equal intervals in the circumferential direction that is centered around the center hole 42a (142a). The holes 43 (143) receive therein the eccentric members 55 (155). Between the eccentric members 55 (155) and the external gear 40 (140), bearings are provided. The external gear 40A (140A) is supported on the eccentric members 55A (155A) of the shaft members 50 (150) via bearings. The external gear 40B (140B) is supported on the eccentric members 55B (155B) of the shaft members 50 (150) via bearings.

The external gear 40 (140) is supported by the two (three) eccentric members 55 (155). The eccentric members 55 (155) of the two (three) shaft members 50 (150) are in phase. Therefore, as the two (three) shaft members 50 (150) rotate, the external gear 40 (140) eccentrically oscillates. In other words, as the two (three) shaft members 50 (150) rotate, the external gear 40 (140) translates in the circumferential direction that is centered around the main rotation axis XR1 (XR2). The external gears 40A and 40B (140A and 140B) are shifted by half a phase.

As rotation is input into the input shaft 35 (135) of the speed reducer 30 (130) configured as described above, the input gear 59 (159) rotates and so do the shaft members 50 (150), which causes the external gear 40 (140) to eccentrically oscillate. During the eccentric oscillation, the external teeth 45 (145) of the external gear 40 (140) mesh with the internal teeth 75 (175) of the casing 70 (170). Due to the difference in number between the external teeth 45 (145) and the internal teeth 75 (175), the carrier 60 (160), which supports the external gear 40 (140) via the shaft members 50 (150), and the casing 70 (170) rotate relative to each other around the main rotation axis XR1 (XR2). When the casing 70 (170) is stationary, the rotation of the carrier 60 (160) is output. When the carrier 60 (160) is stationary, on the other hand, the rotation of the casing 70 (170) is output. According to the shown example, the casing 70 (170) is stationary. Therefore, the rotation of the carrier 60 (160) is output.

The following describes how the brake 10 (110) operates. According to the shown example, the first brake 10 applies a braking force to the first input shaft 35 of the first speed reducer 30. The second brake 110 applies a braking force to the motor shaft 6.

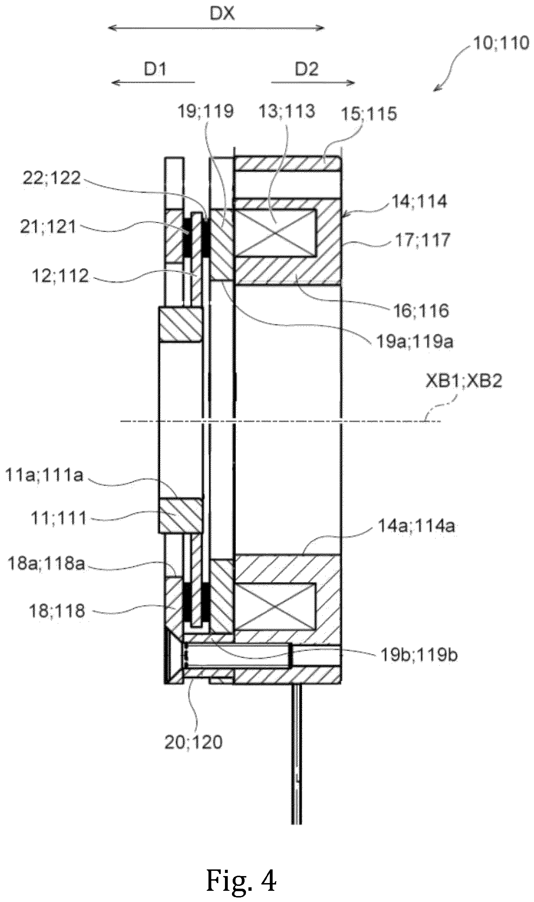

In the example shown in Fig. 4, the brakes 10 and 110 are non-excitation actuated electromagnetic brakes. The non-excitation actuated electromagnetic brakes 10 and 110 are in the actuated state while no power is being fed and in the non-actuated state while power is being fed. While being in the actuated state, the brakes 10 are 110 respectively apply a braking force to the first input shaft 35 and motor shaft 6. While being in the non-actuated state, the brakes 10 and 110 respectively leave the first input shaft 35 and motor shaft 6 released. Therefore, while the first brake 10 is in the non-actuated state, the first input shaft 35 is not subject to a brake force and thus rotatable. While the second brake 110 is in the non-actuated state, the motor shaft 6 is not subject to a brake force and thus rotatable.

The delivery of power to the first and second brakes 10 and 110 occurs in synchronization with the delivery of power to the motor 5. While the motor 5 is powered, the brakes 10 and 110 are also powered. While the motor 5 is not powered, the brakes 10 and 110 are not powered either. Therefore, while the motor 5 is powered, the brakes 10 and 110 are in the non-actuated state, so that the first input shaft 35 and motor shaft 6 are not subject to the braking force produced by the brakes 10 and 110 and thus rotatable. While the motor 5 is not being powered, on the other hand, the brakes 10 and 110 are in the actuated state, thereby applying a braking force to the first input shaft 35 or motor shaft 6. The drive device 1 includes two brakes 10 and 110. One of the two brakes may fail, but the other can still operate. The drive device 1 can thus keep heavy objects at an intended position even if one of the brakes fails.

As shown in Fig. 4, the brake 10 (110) has a hub 11 (111), a rotatable plate 12 (112), a solenoid 13 (113), a yoke 14 (114), a stationary plate 18 (118), and an armature 19 (119). These components of the brake 10 (110) are arranged around the central axis XB1 (XB2).

The hub 11 of the first brake 10 is connected to the first input shaft 35. The hub 11 is not configured to rotate relative to the first input shaft 35 but rotate along with the first input shaft 35. The hub 111 of the second brake 110 is connected to the motor shaft 6. The hub 111 is not configured to rotate relative to the motor shaft 6 but rotate along with the motor shaft 6. More specifically, the hub 11 (111) is shaped like a circular cylinder. The hub 11 (111) has a center hole 11a (111a). The center hole 11a (111a) is located on the central axis XB1 (XB2). The hub 11 (111) is connected to the first input shaft 35 (motor shaft 6) by inserting the first input shaft 35 (motor shaft 6) into the center hole 11a (111a).

The rotatable plate 12 (112) is connected to the hub 11 (111). Stated differently, the rotatable plate 12 of the first brake 10 is connected to the first input shaft 35 via the hub 11. The rotatable plate 112 of the second brake 110 is connected to the motor shaft 6 via the hub 111. The rotatable plate 12 (112) is shaped like a disk. The inner circumferential surface of the rotatable plate 12 (112) is connected to the outer circumferential surface of the hub 11 (111). The rotatable plate 12 (112) is not configured to rotate relative to the hub 11 (111), but rotate along with the hub 11 (111) and accordingly rotate along with the first input shaft 35 (motor shaft 6). The rotatable plate 12 (112) may be formed integrally with the hub 11 (111).

The solenoid 13 (113) is a coil that can be excited when powered. In the illustrated example, the brake 10 (110) includes a plurality of solenoids 13 (113). The solenoids 13 (113) surround the central axis XB1 (XB2). The solenoids 13 (113) may be powered by a common power supply that can also power the motor 5.

The yoke 14 (114) houses the solenoids 13 (113). The yoke 14 (114) has a cylindrical outer wall 15 (115), a cylindrical inner wall 16 (116), and a disk-shaped bottom wall 17 (117). The inner wall 16 (116) is positioned inside the outer wall 15 (115). The solenoids 13 (113) are interposed between the outer wall 15 (115) and the inner wall 16 (116). The bottom wall 17 (117) bridges one end of the outer wall 15 (115) and one end of the inner wall 16 (116). The yoke 14 (114) has a center hole 14a (114a). The center hole 14a (114a) is located on the central axis XB1 (XB2). The first input shaft 35 (motor shaft 6) is inserted into the center hole 14a (114a). The yoke 14 (114) is configured not to rotate relative to the motor casing 7. The yoke 14 of the first brake 10 is fixedly attached onto the motor casing 7 and to the first housing 80 of the first speed reducer 30 via the connecting member 90.

The stationary plate 18 (118) is separated from the yoke 14 (114) in the axial direction DX. The rotatable plate 12 (112) and armature 19 (119) are disposed between the stationary plate 18 (118) and the yoke 14 (114). The stationary plate 18 (118), rotatable plate 12 (112), armature 19 (119) and yoke 14 (114) are arranged in this order in the axial direction DX.

The stationary plate 18 (118) is fixedly attached onto the yoke 14 (114) via a spacer 20 (120). The stationary plate 18 (118) is shaped like a disk and has a center hole 18a (118a). The hub 11 (111) is inserted into the center hole 18a (118a). The hub 11 (111) is configured to rotate relative to the stationary plate 18 (118).

The armature 19 (119) is located between the rotatable plate 12 (112) and the solenoids 13 (113). The armature 19 (119) is shaped like a disk and has a center hole 19a (119a). The center hole 19a (119a) is located on the central axis XB1 (XB2). The armature 19 (119) is supported by the spacer 20 (120). More specifically, the armature 19 (119) has a through hole 19b (119b). The spacer 20 (120) is inserted through the through hole 19b (119b). The armature 19 (119) is movable in the axial direction DX.

The armature 19 (119) is biased toward a first direction D1 by a bias member, which is not shown. The first direction D1 faces the rotatable plate 12 (112) in the axial direction DX. In other words, the armature 19 (119) is biased toward the rotatable plate 12 (112). Therefore, the armature 19 (119) may press the rotatable plate 12 (112) against the stationary plate 18 (118) while the solenoids 13 (113) are not powered. This causes a braking force to be applied from the stationary plate 18 (118) and armature 19 (119) to the rotatable plate 12 (112). On the other hand, while the solenoids 13 (113) are powered, the armature 19 (119) is subject to a magnetic attractive force produced by the solenoids 13 (113) that acts toward a second direction D2. The second direction D2 faces the solenoids 13 (113) in the axial direction DX. In other words, the armature 19 (119) is attracted to the solenoids 13 (113).

A bias member 21 (121) is provided between the rotatable plate 12 (112) and the stationary plate 18 (118). Between the rotatable plate 12 (112) and the armature 19 (119), a bias member 22 (122) is provided. The bias member 21 (121) can bias the rotatable plate 12 (112) toward the second direction D2. In other words, the bias member 21 (121) can bias the rotatable plate 12 (112) in such a direction that the rotatable plate 12 (112) may move away from the stationary plate 18 (118). The bias member 22 (122) can bias the rotatable plate 12 (112) toward the first direction D1. In other words, the bias member 22 (122) can bias the rotatable plate 12 (112) in such a direction that the rotatable plate 12 (112) may move away from the armature 19 (119). Therefore, while the armature 19 (119) is attracted to the solenoids 13 (113) with the solenoids 13 (113) being powered, the rotatable plate 12 (112) stays away from the stationary plate 18 (118) and armature 19 (119). As a result, the rotatable plate 12 (112) is not subject to a braking force from the stationary plate 18 (118) and armature 19 (119) while the solenoids 13 (113) are powered.

In the brake 10 (110) configured as described above, while the solenoids 13 (113) are powered, the armature 19 (119) is attracted toward the solenoid 13 (113), so that the stationary plate 18 (118) and armature 19 (119) applies no braking force to the rotatable plate 12 (112) and hub 11 (111). The rotatable plate 12 (112) and hub 11 (111) are thus allowed to rotate. Therefore, the first input shaft 35 (motor shaft 6) is not subject to the braking force produced by the brake 10 (110) and thus rotatable.

On the other hand, while not powered, the solenoid 13 (113) produces no magnetic attractive force, so that the armature 19 (119) presses the rotatable plate 12 (112) against the stationary plate 18 (118), as described above. As a result, the stationary plate 18 (118) and armature 19 (119) applies a braking force to the rotatable plate 12 (112) and hub 11 (111), so that the first input shaft 35 (motor shaft 6) is prevented from accidentally rotating.

The following now describes how the first speed reducer 30 is connected to the first brake 10. In the drive device 1 relating to the present embodiment, the first brake 10 is interposed between the motor 5 and the first speed reducer 30, as shown in Fig. 1. The first input shaft 35 of the first speed reducer 30 extends through the center holes 11a, 19a, and 14a of the first brake 10, to be connected to the motor shaft 6. The first input shaft 35 has an insertion hole 35a through which the motor shaft 6 is inserted. The insertion hole 35a is open at the end of the first input shaft 35 that faces the motor casing 7. The motor shaft 6 is inserted into the first input shaft 35 from the side where the insertion hole 35a is open. The first speed reducer 30 and motor 5 are connected to each other by the connecting member 90.

As the first brake 10 is provided between the motor 5 and the first speed reducer 30, the position of the first housing 80 of the first speed reducer 30 and/or connecting member 90 in the axial direction DX can be aligned with the position of the first brake 10 in the axial direction DX. Stated differently, when seen in the radial direction DY, the first housing 80 of the first speed reducer 30 and/or connecting member 90 can overlap the first brake 10. This can result in reducing the size in the axial direction DX of the region occupied by the first speed reducer 30 and/or connecting member 90 and brake 10 in the drive device 1. The drive device 1 can thus achieve a reduced size in the axial direction DX. In the example shown in Fig. 1, a portion of the first brake 10 is housed in the first housing 80, and another portion in the connecting member 90.

Furthermore, at least a portion of the motor shaft 6 extends in the first brake 10 in the drive device 1 relating to the present embodiment. In other words, the position of at least a portion of the motor shaft 6 in the axial direction DX is aligned with the position of at least a portion of the first brake 10 in the axial direction DX. Stated differently, when viewed in the radial direction DY, at least a portion of the motor shaft 6 overlaps at least a portion of the first brake 10.

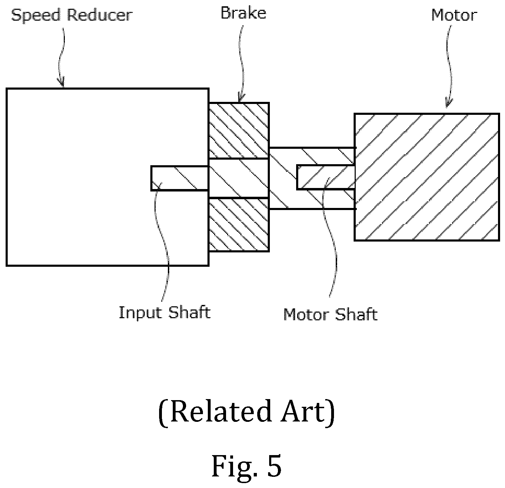

In a conventional drive device including a speed reducer, a motor and a brake, the positions of the speed reducer, motor, and brake in the axial direction are not aligned with each other, as shown in Fig. 5. In the present embodiment, on the other hand, the position of at least a portion of the motor shaft 6 in the axial direction DX is aligned with the position of at least a portion of the first brake 10 in the axial direction DX. This can result in reducing the size in the axial direction DX of the region occupied by the motor 5 and brake 10 in the drive device 1. The drive device 1 can thus achieve a reduced size in the axial direction DX.

Furthermore, at least a portion of the motor shaft 6 extends into the solenoids 13 of the first brake 10 in the shown example. In other words, the position of at least a portion of the motor shaft 6 in the axial direction DX is aligned with the position of at least a portion of the solenoids 13 in the axial direction DX. Stated differently, when viewed in the radial direction DY, at least a portion of the motor shaft 6 overlaps at least a portion of the solenoids 13. This can result in effectively reducing the size in the axial direction DX of the region occupied by the motor 5 and brake 10 in the drive device 1. The drive device 1 can thus effectively achieve a reduced size in the axial direction DX.

While the embodiment has been described with reference to the specific example, this example is not intended to limit the embodiment. The foregoing embodiment can be implemented in various other specific forms and is susceptible to omission, replacement, modification and addition of various elements thereof within the purport of the invention.

For example, the motor shaft 6 may extend into the rotatable plate 12 or hub 11 of the first brake 10. In other words, the position of at least a portion of the motor shaft 6 in the axial direction DX may be aligned with the position of at least a portion of the hub 11 or rotatable plate 12 in the axial direction DX. Stated differently, when viewed in the radial direction DY, at least a portion of the motor shaft 6 may overlap at least a portion of the hub 11 or rotatable plate 12 of the first brake 10. This can result in further effectively reducing the size in the axial direction DX of the region occupied by the motor 5 and first brake 10 in the drive device 1. The drive device 1 can thus effectively achieve a further reduced size in the axial direction DX.

In the above-described embodiment, the carrier 60 (160) serves as the output part of the speed reducer 30 (130). The present embodiment, however, is not limited to such. The casing 70 (170) may serve as the output part of the speed reducer 30 (130). When the first casing 70 constitutes the output part of the first speed reducer 30, the first carrier 60 may be fixedly attached onto the motor casing 7. In this case, the second input shaft 135 may be connected to the first casing 70. When the second casing 170 constitutes the output part of the second speed reducer 130, the second carrier 160 may be fixedly attached onto the motor casing 7.

The drive device 1 may be embodied without the speed reducers 30 and 130. The drive device 1 may be embodied without the second speed reducer 130. In this case, the output part 60 or 70 of the first speed reducer 30 may constitute the output part of the drive device 1.

According to the above-described embodiment and its variations, the drive device 1 includes the motor 5, first speed reducer 30, and first brake 10. The motor 5 has the motor shaft 6 that is configured to rotate about the axis of rotation XM extending along the axial direction DX. The first speed reducer 30 has the first input shaft 35 that is rotatably connected to the motor shaft 6, and the first output part 60 configured to reduce the rotation of the first input shaft 35 and output the reduced rotation. The first brake 10 is interposed between the motor 5 and the first speed reducer 30, and may apply a braking force to the first input shaft 35. The drive device 1 configured in this way can achieve a reduced size in the axial direction DX.

In the above-described embodiment and its variations, the position of at least a portion of the first brake 10 in the axial direction is aligned with the position of at least a portion of the motor shaft 6 in the axial direction. In this case, the drive device 1 can effectively achieve a reduced size in the axial direction DX.

In the above-described embodiment and its variations, the position of at least a portion of the solenoids 13 of the first brake 10 in the axial direction is aligned with the position of at least a portion of the motor shaft 6 in the axial direction. In this case, the drive device 1 can effectively achieve a reduced size in the axial direction DX.

In the above-described variations, the position of at least a portion of the hub 11 of the first brake 10 in the axial direction is aligned with the position of at least a portion of the motor shaft 6 in the axial direction. In this case, the drive device 1 can effectively achieve a reduced size in the axial direction DX.

According to the above-described embodiment and its variations, the motor 5 includes the second brake 110 configured to apply a braking force to the motor shaft 6. In this case, even if one of the brakes 10 and 110 fails, the other of the brakes 10 and 110 can still apply a braking force to the first input shaft 35.

In the above-described embodiment and its variations, the first brake 10 includes the solenoids 13, rotatable plate 12, stationary plate 18, and armature 19. The solenoids 13 can generate a magnetic force when powered. The rotatable plate 12 is configured to rotate relative to the solenoids 13 but not to rotate relative to the first input shaft 35. The stationary plate 18 is configured not to rotate relative to the solenoids 13. The armature 19 is movable in the axial direction DX. The armature 19 is biased by a bias force acting toward the first direction D1 in the axial direction DX. The armature 19 is also movable toward the second direction D2, which is opposite to the first direction D1, when acted upon by the magnetic force produced by the solenoids 13. The armature 19 presses the rotatable plate 12 against the stationary plate 18 when acted upon by the above-mentioned bias or magnetic force, thereby applying a braking force to the first input shaft 35. In this case, whether power is delivered to the solenoid 13 can switch whether to apply a braking force to the first input shaft 35.

According to the above-described embodiment and its variations, the drive device 1 further includes the second speed reducer 130. The second speed reducer 130 is connected to the first output part 60 of the first speed reducer 30. The second speed reducer 130 has the second output part 160 configured to reduce the rotation of the first output part 60 and output the reduced rotation. In this case, the drive device 1 can be used to move heavy objects such as elevator cages, large metal doors and lids.

In the above-described embodiment and its variations, the first speed reducer 30 includes the first casing 70, first external gear 40, first shaft members 50, first carrier 60 serving as the first output part. The first casing 70 has, on its inner circumferential surface, the internal teeth 75 arranged along the circumferential direction. The first external gear 40 has the external teeth 45 meshing with the internal teeth 75 of the first casing 70. The first shaft members 50 are connected to the first input shaft 35 to cause the first external gear 40 to eccentrically oscillate. The first carrier 60 supports the first shaft members 50 and is configured to rotate relative to the first casing 70. The second speed reducer 130 includes the second input shaft 135, second casing 170, second external gear 140, second shaft members 150, and second carrier 160 serving as the second output part. The second input shaft 135 is connected to the first carrier 60. The second casing 170 has, on its inner circumferential surface, the internal teeth 175 arranged along the circumferential direction. The second external gear 140 has the external teeth 145 meshing with the internal teeth 175 of the second casing 170. The second shaft members 150 are connected to the second input shaft 135 and configured to cause the second external gear 140 to eccentrically oscillate. The second carrier 160 supports the second shaft member 150 and is configured to rotate relative to the second casing 170. In this manner, the drive device 1 as a whole can be less likely to malfunction.

Naturally, the variations of the embodiment described above may be combined together in an appropriate manner.

## Claims

1. A drive device comprising:
a motor including a motor shaft configured to rotate on an axis of rotation extending along an axial direction;
a first speed reducer including:
a first input shaft connected to the motor shaft and configured to rotate; and
a first output part configured to reduce rotation of the first input shaft and output the reduced rotation; and
a first brake disposed between the motor and the first speed reducer, the first brake being configured to apply a braking force to the first input shaft.

2. The drive device of claim 1, wherein a position of at least a portion of the first brake in the axial direction is aligned with a position of at least a portion of the motor shaft in the axial direction.

3. The drive device of claim 1, wherein the motor includes a second brake configured to apply a braking force to the motor shaft.

4. The drive device of claim 1, wherein the first brake includes:
a solenoid configured to generate a magnetic force upon being powered;
a rotatable plate configured to rotate relative to the solenoid but not to rotate relative to the first input shaft;
a stationary plate configured not to rotate relative to the solenoid; and
an armature configured to move in the axial direction, the armature being biased by a bias force acting toward a first direction in the axial direction, the armature being configured to move toward a second direction that is opposite to the first direction upon being acted upon by the magnetic force of the solenoid, the armature being configured to press the rotatable plate against the stationary plate upon being acted upon by the bias force or the magnetic force to apply a braking force to the first input shaft.

5. The drive device of claim 4, wherein a position of at least a portion of the solenoid in the axial direction is aligned with a position of at least a portion of the motor shaft in the axial direction.

6. The drive device of claim 4,
wherein the first brake includes a hub connecting the rotatable plate to the first input shaft, and
wherein a position of at least a portion of the hub in the axial direction is aligned with a position of at least a portion of the motor shaft in the axial direction.

7. The drive device of claim 1, further comprising a second speed reducer connected to the first output part, the second speed reducer including a second output part configured to reduce rotation of the first output part and output the reduced rotation.

8. The drive device of claim 7,
wherein the first speed reducer includes:
a first casing having, on an inner circumferential surface thereof, internal teeth arranged in a circumferential direction;
a first external gear having external teeth meshing with the internal teeth of the first casing;
a first shaft member connected to the first input shaft, the first shaft member being configured to cause the first external gear to eccentrically oscillate; and
a first carrier supporting the first shaft member, the first carrier being configured to serve as the first output part configured to rotate relative to the first casing, and
wherein the second speed reducer includes:
a second input shaft connected to the first carrier;
a second casing having, on an inner circumferential surface thereof, internal teeth arranged in a circumferential direction;
a second external gear having external teeth meshing with the internal teeth of the second casing;
a second shaft member connected to the second input shaft, the second shaft member being configured to cause the second external gear to eccentrically oscillate; and
a second carrier supporting the second shaft member, the second carrier being configured to serve as the second output part configured to rotate relative to the second casing.
